# FASCICULE DE BREVET EUROPEEN

(11) **EP 4 217 253 B1**
(45) Date de publication et mention de la délivrance du brevet: **04.09.2024**
(21) Numéro de dépôt: 21752080.8
(22) Date de dépôt: 20.07.2021
(51) Int. Cl.: B62D 21/11

(54) **BERCEAU COMPORTANT UNE ENTRETOISE RENFORCEE**
WIEGE MIT VERSTÄRKTEM ABSTANDSHALTER
CRADLE COMPRISING A REINFORCED SPACER

(30) Priorité: 25.09.2020 FR 2009780
(43) Date de publication de la demande: 02.08.2023
(73) Titulaire: Stellantis Auto SAS, 78300 Poissy (FR)
(72) Inventeur: GALMICHE, Jean Pierre, 25490 DAMPIERRE LES BOIS (FR); LE GUILLOU, Olivier, 25200 MONTBELIARD (FR); KONDRATOFF, Axel, 25150 DAMBELIN (FR)
(86) Numéro de dépôt international: PCT/FR2021/051352
(87) Numéro de publication internationale: WO 2022/064116

(56) Documents cités:
- EP-A1- 3 434 562
- EP-B1- 2 902 303
- US-B2- 10 239 560

## Description

La présente invention revendique la priorité de la demande française N°2009780 déposée le 25.09.2020.

La présente invention concerne un berceau de véhicule et un véhicule comportant un tel berceau.

La présente invention concerne plus particulièrement un tel berceau qui comporte une coque inférieure, une coque supérieure et une entretoise, la coque inférieure étant solidarisée à la coque supérieure en délimitant un espace creux dans lequel est positionnée ladite entretoise en appui entre lesdites deux coques, la coque inférieure comportant aussi en saillie dans ledit espace creux un support pour la fixation du berceau sur la structure du véhicule, ledit berceau étant adapté pour, à l'emplacement de l'entretoise, former un support pour des éléments de suspension, des éléments de fixation d'un moteur ou des éléments de commande de direction.

Un tel berceau est divulgué dans le document EP-B1-2902303 avec une entretoise qui est fixée aux deux coques par des soudures circulaires à chacune de ces deux extrémités.

Un tel berceau, au niveau des entretoises ne permet pas une résistance important en cas de choc, les deux soudures formées aux extrémités de l'entretoise cisaillant assez tôt lors du choc.

Il apparait aussi un phénomène de fatigue de ces soudures dans le temps dû à un manque de maintien de la partie centrale des entretoises, risquant aussi de cisailler les soudures.

Le dispositif selon l'invention permet de remédier à cet inconvénient.

Il comporte en effet selon une première caractéristique un berceau de véhicule qui comporte une coque inférieure, une coque supérieure et une entretoise, la coque inférieure étant solidarisée à la coque supérieure en délimitant un espace creux dans lequel est positionnée ladite entretoise en appui entre lesdites deux coques, ledit berceau étant adapté pour, à l'emplacement de l'entretoise, former un support pour des éléments de suspension, des éléments de fixation d'un moteur ou des éléments de commande de direction, la coque inférieure comportant aussi en saillie dans ledit espace creux un support pour la fixation du berceau sur la structure du véhicule, caractérisé en ce qu'un élément de renfort est positionné dans ledit espace creux, ledit élément de renfort étant solidarisé à la coque inférieure en bordure du support de fixation du berceau et comporte une ouverture dans laquelle est positionnée ladite entretoise.

Selon une deuxième caractéristique de l'invention, la partie de l'élément de renfort dans laquelle est formée ladite ouverture est écartée de la coque inférieure d'au moins 1/3 de la hauteur de l'entretoise.

Selon une deuxième caractéristique de l'invention, l'élément de renfort est formé par une plaque en tôle.

Selon une troisième caractéristique de l'invention, le support de fixation du berceau comporte une douille soudée à la coque inférieure, ladite douille étant positionnée dans ledit espace creux.

Selon une quatrième caractéristique de l'invention, l'élément de renfort est solidarisé à la coque inférieure par des points de soudure.

Selon une cinquième caractéristique de l'invention, le berceau comporte au moins deux entretoises positionnées d'un même côté dudit berceau, l'élément de renfort comportant au moins deux ouvertures dans lesquelles sont positionnées respectivement lesdites au moins deux entretoises.

Selon une cinquième caractéristique de l'invention, la première desdites deux entretoises est adaptée pour la fixation d'un triangle de suspension et la seconde desdites deux entretoises est adaptée pour la fixation d'une crémaillère de direction.

Selon une sixième caractéristique de l'invention, le berceau comporte au moins une troisième entretoise adaptée pour la fixation, avec ladite première entretoise, dudit triangle de suspension, l'élément de renfort comportant au moins une troisième ouverture dans laquelle est positionnée ladite troisième entretoise.

Selon une septième caractéristique de l'invention, la pièce de renfort forme aussi une pièce de pré-maintien de ladite ou desdites entretoises lors de l'assemblage du berceau.

La présente invention concerne aussi un véhicule qui comporte un tel berceau.

Les dessins annexés illustrent l'invention :

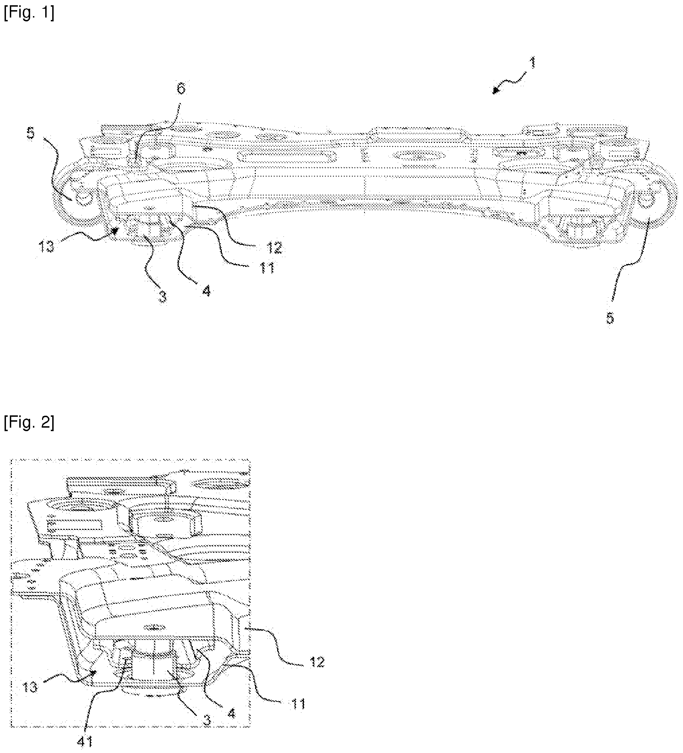

[Fig. 1] représente une vue en perceptive d'un berceau selon l'invention, comportant un élément de suspension.
[Fig. 2] représente une vue partielle du berceau seul selon l'invention.

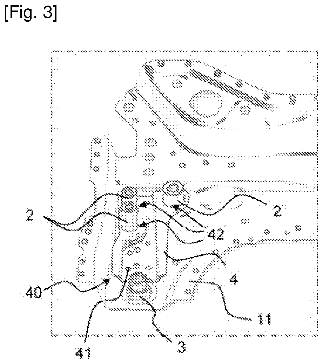

[Fig. 3] représente une vue partielle du berceau seul selon l'invention sans sa coque supérieure.

En référence à ces dessins, un berceau 1 d'un véhicule comporte une coque inférieure 11 et une coque supérieure 12 délimitant un espace creux 13.

Dans l'espace creux 13 est positionné des entretoises 2 qui permettent de rigidifier les deux coques pour fixer sur le berceau 1 des éléments de suspension, des éléments de fixation d'un moteur ou des éléments de commande de direction.

Dans l'espace creux 13 est aussi positionné un élément de renfort 4 qui permet de rigidifier le berceau 1 en cas de choc.

L'élément de renfort 4 est formé par une plaque en tôle obtenue par un procédé d'emboutissage.

Une extrémité 40 de la plaque de tôle 4 est solidarisée à la coque inférieure 11 au moyen de points de soudures 41, la plaque de tôle 4 s'écarte ensuite de la coque inférieure 11 à l'approche des entretoises 2 pour former un support aux entretoises 2, les maintenant en position lors de l'assemblage du berceau 1 et lors du montage des éléments de suspension 5 ou des éléments de commande de direction sur le berceau 1.

Pour ce faire, la plaque en tôle 4 s'écarte de la coque inférieure 11 d'au moins 1/3 de la hauteur de l'entretoise 2 et comporte des ouvertures 42 dans lesquelles sont positionnées les entretoises 2.

La coque inférieure 11 comporte un élément de renfort 3, en particulier une douille, qui est soudée sur la coque inférieure 11 et qui permet de solidariser le berceau 1 à la structure du véhicule.

La douille 3 est positionnée en saillie dans l'espace creux 13 formé dans le berceau 1, avec l'extrémité 40 de la plaque en tôle 4 qui est positionnée en bordure de la douille 3, permettant à cette extrémité 40 de la plaque en tôle 4 de venir en appui contre la douille 3 en cas de choc sur le berceau 1.

Dans le cas d'un berceau arrière, la douille est positionnée en avant du berceau, faisant qu'un choc arrière fait avancer la plaque en tôle contre la douille.

Dans l'exemple de mode de réalisation tel que représenté, le berceau 1 est un berceau avant avec la douille 3 qui est positionnée en arrière du berceau, faisant qu'un choc avant fait reculer la plaque en tôle 4 contre la douille 3.

Toujours dans l'exemple de mode de réalisation tel que représenté, une première des entretoises 2 et une deuxième des entretoises 2 forment des supports pour fixer sur le berceau 1 des triangles inférieurs de suspension 5 et une troisième des entretoises 2 forme un support pour fixer sur le berceau 1 une crémaillère de direction.

La plaque en tôle 4 comporte trois ouvertures 42 correspondantes aux trois entretoises 2, faisant que en cas de choc avant, les trois entretoises 2 sont maintenues en position dans leur partie centrale par la plaque en tôle 4, plaque en tôle 4 qui est elle-même maintenue en appui contre la douille 3.

Trois ouvertures sont formées dans la coque supérieure 11 en correspondance avec des ouvertures formées dans chacune des trois entretoises 2 et sont en correspondance avec trois ouvertures formées dans la coque inférieure 12, permettant le passage de trois vis 6 pour fixer le triangle inférieur de suspension 5 et la crémaillère de direction au berceau 1.

La présence de la plaque en tôle 4 permet aussi aux entretoises 2 de faciliter leur assemblage lors de la fabrication du berceau 1 en formant un pré-maintien, simplifiant les opérations de soudage et diminuant les problèmes de fatigue pouvant se produire au niveau des soudures entre les extrémités des entretoises 2 et la coque inférieure 11 et la coque supérieure 12.

## Revendications

1. Berceau (1) de véhicule qui comporte une coque inférieure (11), une coque supérieure (12) et une entretoise (2), la coque inférieure (11) étant solidarisée à la coque supérieure (12) en délimitant un espace creux (13) dans lequel est positionnée ladite entretoise (2) en appui entre lesdites deux coques (11, 12), ledit berceau (1) étant adapté pour, à l'emplacement de l'entretoise (2), former un support pour des éléments de suspension (5), des éléments de fixation d'un moteur ou des éléments de commande de direction, la coque inférieure comportant aussi en saillie dans ledit espace creux (13) un support (3) pour la fixation du berceau (1) sur la structure du véhicule, **caractérisé en ce qu'**un élément de renfort (4) est positionné dans ledit espace creux (13), ledit élément de renfort (4) étant solidarisé à la coque inférieure (11) en bordure du support (3) de fixation du berceau (1) et comporte une ouverture (42) dans laquelle est positionnée ladite entretoise (2).

2. Berceau (1) selon la revendication 1, **caractérisé en ce que** la partie de l'élément de renfort (4) dans laquelle est formée ladite ouverture (42) est écartée de la coque inférieure (11) d'au moins 1/3 de la hauteur de l'entretoise (2).

3. Berceau (1) selon la revendication 1 ou 2, **caractérisé en ce que** l'élément de renfort (4) est formé par une plaque en tôle.

4. Berceau (1) selon l'une quelconque des revendications précédentes, **caractérisé en ce que** le support (3) de fixation du berceau (1) comporte une douille soudée à la coque inférieure (11), ladite douille étant positionnée dans ledit espace creux (13).

5. Berceau (1) selon l'une quelconque des revendications précédentes, **caractérisé en ce que** l'élément de renfort (4) est solidarisé à la coque inférieure (11) par des points de soudure (41).

6. Berceau (1) selon l'une quelconque des revendications précédentes, **caractérisé en ce que** le berceau (1) comporte au moins deux entretoises (2) positionnées d'un même côté dudit berceau (1), l'élément de renfort (4) comportant au moins deux ouvertures (42) dans lesquelles sont positionnées respectivement lesdites au moins deux entretoises (2).

7. Berceau (1) selon la revendication précédente, **caractérisé en ce que** la première desdites deux entretoises (2) est adaptée pour la fixation d'un triangle de suspension (5) et la seconde desdites deux entretoises (2) est adaptée pour la fixation d'une crémaillère de direction.

8. Berceau (1) selon la revendication 6 ou 7, **caractérisé en ce que** le berceau (1) comporte au moins une troisième entretoise (2) adaptée pour la fixation, avec ladite première entretoise (2), dudit triangle de suspension (5), l'élément de renfort (4) comportant au moins une troisième ouverture (42) dans laquelle est positionnée ladite troisième entretoise (2).

9. Berceau (1) selon l'une quelconque des revendications précédentes, **caractérisé en ce que** la pièce de renfort (4) forme aussi une pièce de pré-maintien de ladite ou desdites entretoises (2) lors de l'assemblage du berceau (1).

10. Véhicule comportant un berceau (1) selon l'une quelconque des revendications précédentes.

## Patentansprüche

1. Fahrzeugträger (1), der eine untere Schale (11), eine obere Schale (12) und eine Strebe (2) aufweist, wobei die untere Schale (11) mit der oberen Schale (12) fest verbunden ist, indem sie einen Hohlraum (13) begrenzt, in dem die Strebe (2) in Anlage zwischen den beiden Schalen (11, 12) angeordnet ist, wobei die Strebe (1) geeignet ist, an der Stelle der Strebe (2) einen Träger für Aufhängungselemente (5), Motorbefestigungselemente oder Steuerelemente zu bilden Die untere Schale weist außerdem in dem Hohlraum (13) einen Träger (3) zur Befestigung des Gestells (1) an der Fahrzeugstruktur auf, **dadurch gekennzeichnet, dass** ein Verstärkungselement (4) in dem Hohlraum (13) angeordnet ist, wobei das Verstärkungselement (4) mit der unteren Schale (11) am Rand des Trägers (3) zur Befestigung des Gestells (1) fest verbunden ist und eine Öffnung (42) aufweist, in der das Distanzstück (2) angeordnet ist.

2. Wiege (1) nach Anspruch 1, **dadurch gekennzeichnet, dass** der Teil des Verstärkungselements (4), in dem die Öffnung (42) ausgebildet ist, von der unteren Schale (11) um mindestens 1/3 der Höhe des Abstandshalters (2) beabstandet ist.

3. Wiege (1) nach Anspruch 1 oder 2, **dadurch gekennzeichnet, dass** das Verstärkungselement (4) durch eine Blechplatte gebildet ist.

4. Wiege (1) nach einem der vorhergehenden Ansprüche, **dadurch gekennzeichnet, dass** der Halter (3) zur Befestigung der Wiege (1) eine Hülse aufweist, die mit der unteren Schale (11) verschweißt ist, wobei die Hülse in dem Hohlraum (13) angeordnet ist.

5. Wiege (1) nach einem der vorhergehenden Ansprüche, **dadurch gekennzeichnet, dass** das Verstärkungselement (4) mit der unteren Schale (11) durch Schweißpunkte (41) fest verbunden ist.

6. Wiege (1) nach einem der vorhergehenden Ansprüche, **dadurch gekennzeichnet, dass** die Wiege (1) mindestens zwei Streben (2) aufweist, die auf derselben Seite der Wiege (1) angeordnet sind, wobei das Verstärkungselement (4) mindestens zwei Öffnungen (42) aufweist, in denen jeweils die mindestens zwei Streben (2) angeordnet sind.

7. Wiege (1) nach dem vorhergehenden Anspruch, **dadurch gekennzeichnet, dass** die erste der beiden Streben (2) zur Befestigung eines Aufhängungsdreiecks (5) und die zweite der beiden Streben (2) zur Befestigung einer Lenkstange geeignet ist.

8. Wiege (1) nach Anspruch 6 oder 7, **dadurch gekennzeichnet, dass** die Wiege (1) mindestens eine dritte Strebe (2) aufweist, die zur Befestigung der Aufhängungsdreiecke (5) mit der ersten Strebe (2) geeignet ist, wobei das Verstärkungselement (4) mindestens eine dritte Öffnung (42) aufweist, in der die dritte Strebe (2) angeordnet ist.

9. Wiege (1) nach einem der vorhergehenden Ansprüche, **dadurch gekennzeichnet, dass** das Verstärkungsteil (4) auch ein Teil zur Vorhaltung des oder der Streben (2) beim Zusammenbau der Wiege (1) bildet.

10. Fahrzeug mit einem Gestell (1) nach einem der vorhergehenden Ansprüche.

## Claims

1. Cradle (1) of a vehicle which comprises a lower shell (11), an upper shell (12) and a spacer (2), the lower shell (11) being secured to the upper shell (12) by defining a hollow space (13) in which said spacer (2) is positioned in abutment between said two shells (11, 12), said cradle (1) being adapted to, at the location of the spacer (2), form a support for suspension elements (5), fixing elements of an engine or lower steering control elements, the cradle being also projecting into said hollow space (13) a support (3) for fixing the cradle (1) to the structure of the vehicle, **characterized in that** a reinforcing element (4) is positioned in said hollow space (13), said reinforcing element (4) being secured to the lower shell (11) at the edge of the support (3) for fixing the cradle (1) and comprises an opening (42) in which said spacer (2) is positioned.

2. Cradle (1) according to claim 1, **characterized in that** the part of the reinforcing element (4) in which the said opening (42) is formed is separated from the lower shell (11) by at least 1/3 of the height of the spacer (2).

3. Cradle (1) according to claim 1 or 2, **characterized in that** the reinforcing element (4) is formed by a sheet metal plate.

4. Cradle (1) according to any one of the preceding claims, **characterized in that** the support (3) for fixing the cradle (1) comprises a socket welded to the lower shell (11), the said socket being positioned in the said hollow space (13).

5. Cradle (1) according to any one of the preceding claims, **characterized in that** the reinforcing element (4) is secured to the lower shell (11) by welding spots (41).

6. Cradle (1) according to any one of the preceding claims, **characterized in that** the cradle (1) comprises at least two spacers (2) positioned on the same side of said cradle (1), the reinforcing element (4) comprising at least two openings (42) in which are positioned respectively said at least two spacers (2).

7. Cradle (1) according to the preceding claim, **characterized in that** the first of said two spacers (2) is suitable for fixing a suspension triangle (5) and the second of said two spacers (2) is suitable for fixing a steering rack.

8. Cradle (1) according to claim 6 or 7, **characterized in that** the cradle (1) comprises at least a third spacer (2) adapted for fixing, with the said first spacer (2), the said suspension triangle (5), the reinforcing element (4) comprising at least a third opening (42) in which the said third spacer (2) is positioned.

9. Cradle (1) according to any one of the preceding claims, **characterized in that** the reinforcement piece (4) also forms a part for pre-holding said spacer or spacers (2) during the assembly of the cradle (1).

10. Vehicle comprising a cradle (1) according to any one of the preceding claims.
